# EUROPEAN PATENT APPLICATION

(11) **EP 4 675 517 A1**
(43) Date of publication of application: **07.01.2026**
(21) Application number: 24763788.7
(22) Date of filing: 22.02.2024
(51) Int. Cl.: G06N 20/00, G06T 7/00

(54) **INFORMATION PROCESSING SYSTEM AND COMPUTER PROGRAM**

(30) Priority: 28.02.2023 JP 2023029571
(71) Applicant: Panasonic Intellectual Property Management Co., Ltd., Kadoma-shi, Osaka 571-0057 (JP)
(72) Inventor: NAKATSUKA Shunsuke, Kadoma-shi, Osaka 571-0057 (JP)
(74) Representative: Appelt, Christian W.
(86) International application number: PCT/JP2024/006564
(87) International publication number: WO 2024/181308

(57) **Abstract**

An AI processing apparatus 12 stores a training dataset and a function approximator generated based on the training dataset in association with each other. The AI processing apparatus 12 generates a learning history screen that shows a list of a plurality of sets each associating the training dataset with the function approximator generated based on the training dataset. The learning history screen is adapted to receive a user operation to create a new set derived from an existing set. The AI processing apparatus 12 generates an edit screen for the new set, which is an edit screen that allows editing the training dataset associated with the existing set.

## Description

### TECHNICAL FIELD

The present disclosure relates to data processing technology and, in particular, to an information processing system and a computer program.

### BACKGROUND ART

For example, deep learning is used in an image recognition process. Deep Learning is known as a methodology for machine learning that uses a multi-layered neural network, and, for example, a convolutional neural network is used in a multi-layer neural network. A convolutional neural network is formed by a multi-layered neural network that repeats convolution and pooling in a local area. Furthermore, a structure of a fully convolutional neural network in which the fully connected layers constituting a convolutional neural network are configured as convolutional layers has been proposed (see, for example, Non-Patent Literature 1).

### RELATED-ART LITERATURE

### NON-PATENT LITERATURE

Non-Patent Literature 1: Jonathan Long, Evan Shelhamer, Trevor Darrell, "Fully Convolutional Networks for Semantic Segmentation", The IEEE Conference on Computer Vision and Pattern Recognition (CVPR), 2015, pp. 3431-3440

### SUMMARY OF INVENTION

### TECHNICAL PROBLEM

The training data and the performance of a function approximator created by machine learning based on the training data are closely related. Developers of systems that use a function approximator may want to reproduce past training data for which a function approximator with good performance was created at a later point in time.

The present disclosure addresses the issue described above, and a purpose thereof is to provide a technology of supporting efficient creation a function approximator.

### SOLUTION TO PROBLEM

An information processing system according to an embodiment of the present disclosure includes: a model generation unit that generates a function approximator by learning based on a training dataset; a storage unit that stores the training dataset and the function approximator generated based on the training dataset in association with each other; a learning history screen generation unit that generates a learning history screen that shows a list of a plurality of sets each associating the training dataset with the function approximator generated based on the training dataset; and an edit screen generation unit. The learning history screen is adapted to receive a user operation to create a new set derived from an existing set, and the edit screen generation unit generates an edit screen for the new set, which is an edit screen that allows editing the training dataset associated with the existing set.

Optional combinations of the aforementioned constituting elements, and implementations of the embodiment in the form of apparatuses, methods, computer programs, and recording mediums recording computer programs may also be practiced as additional modes of the present disclosure.

### ADVANTAGEOUS EFFECTS OF INVENTION

According to the technology of the present disclosure, efficient creation of a function approximator can be supported.

### BRIEF DESCRIPTION OF DRAWINGS

[Fig. 1] Fig. 1 shows a configuration of the information processing system of the embodiment.
[Fig. 2] Fig. 2 is a block diagram showing functional blocks of the AI processing apparatus of Fig. 1.
[Fig. 3] Fig. 3 is a flowchart showing the operation of the AI processing apparatus related to supporting the creation of a new AI model.
[Fig. 4] Fig. 4 shows an example of the learning history screen.
[Fig. 5] Fig. 5 shows an example of the create-new window.
[Fig. 6] Fig. 6 shows an example of the new learning history screen.
[Fig. 7] Fig. 7 shows an example of the edit screen.
[Fig. 8] Fig. 8 shows an example of the learning history screen of a variation.

### DESCRIPTION OF EMBODIMENTS

The apparatus or the entity that executes the method according to the disclosure is provided with a computer. By causing the computer to run a program, the function of the apparatus or the entity that executes the method according to the disclosure is realized. The computer is comprised of a processor that operates in accordance with the program as a main hardware feature. The disclosure is non-limiting as to the type of the processor so long as the function is realized by running the program. The processor is comprised of one or a plurality of electronic circuits including a semiconductor integrated circuit (IC) or a large-scale integration (LSI). The terms IC and LSI may change depending on the level of integration, and the processor may be comprised of a system LSI, a Very Large Scale Integration (VLSI), or an Ultra Large Scale Integration (ULSI). A field programmable gate array (FPGA), which is programmed after an LSI is manufactured, or a reconfigurable logic device, in which connections inside the LSI can be reconfigured or circuit compartments inside the LSI can be set up, can be used for the same purpose. The plurality of electronic circuits may be integrated in one chip or provided in a plurality of chips. The plurality of chips may be aggregated in one apparatus or provided in a plurality of apparatuses. The program may be recorded in a computer-readable non-transitory recording medium such as a read only memory (ROM), an optical disk, and a hard disk drive or recorded in a computer-readable transitory storage medium such as a random access memory (RAM). The program may be stored in a recording medium in advance or supplied to a recording medium or a storage medium via wide area communication network including the Internet.

An outline of the technology of the embodiment will be described. In recent years, function approximators created by machine learning are used in various fields. For example, an image recognition process by a function approximator may be used for inspection of products manufactured in factories, etc. A function approximator can be said to be a mathematical model or an AI model and is referred to as an AI model in the embodiment.

Training data (i.e., learning data) and the performance of an AI model created by machine learning based on the training data are closely related. In the event that the performance of an AI model deteriorates in the process of successively creating AI models, the developer of a system that uses the AI model may want to reproduce past training data for which the AI model with good performance was created at a later point in time.

The information processing system of the embodiment addresses this by providing the user with a learning history screen that shows a list of a plurality of sets each associating the training dataset with the AI model generated based on the training dataset. The training dataset of the embodiment shall cover both a training image and an image of a portion of the training image clipped from the training image. The information processing system of the embodiment further provides, in the event that a user operation to create a new set derived from an existing set is input, the user with an edit screen for the new set, which is an edit screen that allows editing the training dataset associated with the existing set. This supports efficient creation of an AI model.

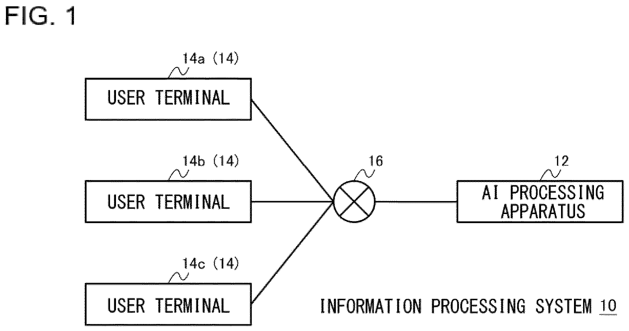

Details of the technology of the embodiment will be described. Fig. 1 shows a configuration of the information processing system 10 of the embodiment. The information processing system 10 includes an AI processing apparatus 12 and a plurality of user terminals 14. The apparatuses shown in Fig. 1 are connected via a communication network 16 including a LAN, WAN, the Internet, etc.

The AI processing apparatus 12 is an information processing apparatus that executes a process related to generation and evaluation of an AI model. The AI processing apparatus 12 of the embodiment is a cloud server that provides a data processing service as a cloud service.

The plurality of user terminals 14 are information processing apparatuses controlled by a plurality of users who use the service of the AI processing apparatus 12. For example, the user terminal 14 is an information processing apparatus controlled by the developer of a system that uses an AI model. The plurality of user terminals 14 include a user terminal 14a, a user terminal 14b, and a user terminal 14c controlled by different users. The user terminal 14 may be a PC, a tablet terminal, or a smartphone.

In an embodiment, the AI processing apparatus 12 has the function of a web server. The AI processing apparatus 12 provides web content (HTML data, etc.) related to the development and evaluation of the AI model to the user terminal 14. The user terminal 14 accesses the AI processing apparatus 12 via a web browser. Further, the user terminal 14 displays the web content (for example, the AI management screen described later) provided by the AI processing apparatus 12 on a predetermined display.

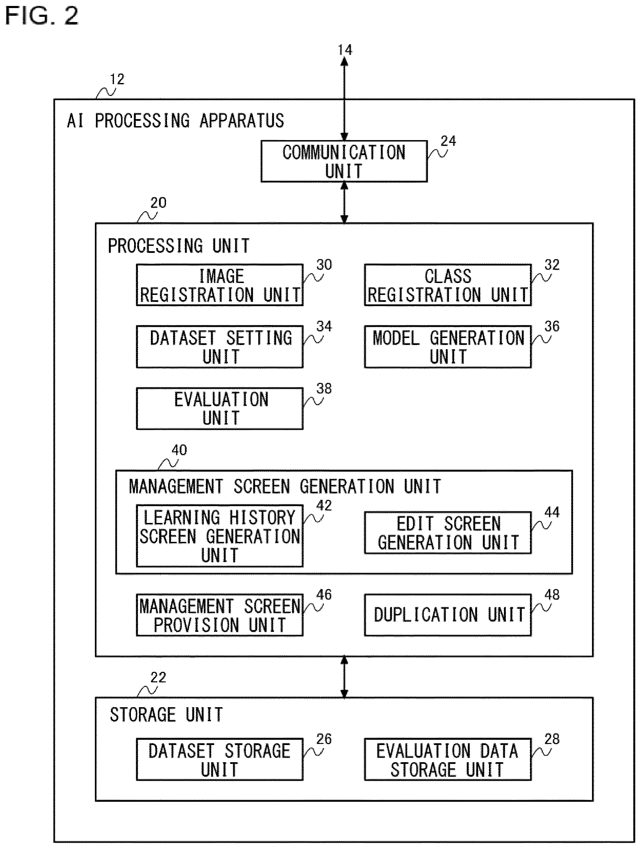

Fig. 2 is a block diagram showing functional blocks of the AI processing apparatus 12 of Fig. 1. The blocks shown in the block diagrams of the present disclosure are implemented in hardware such as devices and mechanical apparatus exemplified by a CPU and a memory of a computer, and in software such as a computer program. Fig. 1 depicts functional blocks implemented by the cooperation of those. It will be understood by those skilled in the art that these functional blocks are implemented in a variety of manners by a combination of hardware and software.

The AI processing apparatus 12 includes a processing unit 20, a storage unit 22, and a communication unit 24. The processing unit 20 executes various data processes related to the development and evaluation of the AI model. The storage unit 22 stores data referenced or updated by the processing unit 20. The communication unit 24 communicates with an external apparatus according to a predetermined communication protocol. The processing unit 20 transmits and receives data to and from the user terminal 14 via the communication unit 24.

The storage unit 22 includes a dataset storage unit 26 and an evaluation data storage unit 28. The dataset storage unit 26 stores various data related to the AI model. The dataset storage unit 26 of the embodiment stores a training dataset (e.g., a plurality of training images) and an AI model generated based on the training dataset in association with each other.

A group of data related to one AI model stored in the dataset storage unit 26 will also be referred to as a "model dataset" hereinafter. The model dataset includes (1) ID, (2) name, (3) training dataset, (4) evaluation dataset (e.g., a plurality of evaluation images), (5) information on a class in classification (also called "determination category"), (6) model data for the AI model (e.g., a file storing the AI model, etc.), (7) AI model status, (8) copy source, (9) update date and time. The ID of a further model dataset originating the model dataset is set in the copy source of (8).

The evaluation data storage unit 28 stores data related to the evaluation of the AI model. Specifically, the evaluation data storage unit 28 stores information related to the correctness of classification of the evaluation dataset by the AI model and an evaluation index value related to the accuracy of classification by the AI model.

The processing unit 20 includes an image registration unit 30, a class registration unit 32, a dataset setting unit 34, a model generation unit 36, an evaluation unit 38, a management screen generation unit 40, a management screen provision unit 46, and a duplication unit 48. The management screen generation unit 40 includes a learning history screen generation unit 42 and an edit screen generation unit 44.

The functions of the plurality of function blocks of the processing unit 20 may be implemented in a computer program (in this case, referred to as "AI management program"). The AI management program may be stored in a non-temporary recording medium and installed in the storage of the AI processing apparatus 12 via the recording medium. Further, the AI management program may be downloaded via the network and installed in the storage of the AI processing apparatus 12. The processor (CPU, etc.) of the AI processing apparatus 12 may exhibit the functions of the plurality of functional blocks of the processing unit 20 by reading the AI management program into the main memory and executing the program.

The operation of the information processing system 10 according to the above configuration will be described. In the following description, the web content as a user interface provided by the AI processing apparatus 12 to the user terminal 14 is collectively referred to as the "AI management screen". The AI management screen includes a learning history screen and an edit screen described later.

The user terminal 14 accesses the AI processing apparatus 12 via a web browser in response to a user operation. The management screen generation unit 40 of the AI processing apparatus 12 generates various AI management screens. The management screen provision unit 46 of the AI processing apparatus 12 transmits data for the AI management screen to the user terminal 14. The user terminal 14 displays the AI management screen on a predetermined display. The user terminal 14 transmits information and data to the AI processing apparatus 12 in response to a user operation input in the AI management screen.

The image registration unit 30 of the AI processing apparatus 12 stores, in the dataset storage unit 26, a plurality of training images uploaded from the user terminal 14 and a plurality of evaluation images as a model dataset identified by a particular ID (in this case, referred to as "target model dataset"). The class registration unit 32 of the AI processing apparatus 12 stores information on a class in classification by the AI model uploaded from the user terminal 14 in the dataset storage unit 26 as data for the target model dataset.

The management screen provision unit 46 of the AI processing apparatus 12 transmits a dataset setting screen (not shown) for extracting a dataset (hereinafter also referred to as "training dataset") from the registered training image to the user terminal 14. A training dataset can be said to be a plurality of images clipped from the training image. The user terminal 14 causes a predetermined display to display the dataset setting screen. The user clips the training dataset from the training image in the dataset setting screen and associates the training dataset thus clipped with one of the plurality of classes registered.

The user terminal 14 transmits the training dataset corresponding to one of the plurality of classes set in the dataset setting screen to the AI processing apparatus 12. The dataset setting unit 34 of the AI processing apparatus 12 receives the training dataset transmitted from the user terminal 14 and stores the training dataset as the data for the target model dataset in the dataset storage unit 26. In practice, the training dataset corresponding to each of the plurality of classes registered is uploaded from the user terminal 14 to the AI processing apparatus 12 and is and registered therein.

The user terminal 14 transmits data requesting generation of a AI model to the AI processing apparatus 12 in response to a user operation in the AI management screen. The data requesting generation of an AI model includes designation of the training dataset used in generation of the AI model and the evaluation dataset used in evaluation of the AI model.

The model generation unit 36 of the AI processing apparatus 12 generates an AI model as a function approximator by machine learning based on the training dataset designated in the request from the user terminal 14. The AI model may be a fully convolutional neural network or may be a mathematical model (decision tree, etc.) of a type different from a neural network. The model generation unit 36 stores the data for the generated AI model in the dataset storage unit 26 in association with the training dataset used in generation of the AI model.

The evaluation unit 438 of the AI processing apparatus 12 evaluates the AI model generated by the model generation unit 36 based on the evaluation data (e.g., evaluation image) registered in advance. A publicly known method may be employed for evaluation of the AI model. For example, the evaluation unit 38 may measure the performance of the AI model based on the correct answer rate yielded when the evaluation data is classified by the AI model. The evaluation unit 38 stores the result of evaluation of the AI model in the evaluation data storage unit 28 in association with the identification information (e.g., model dataset ID) on the AI model.

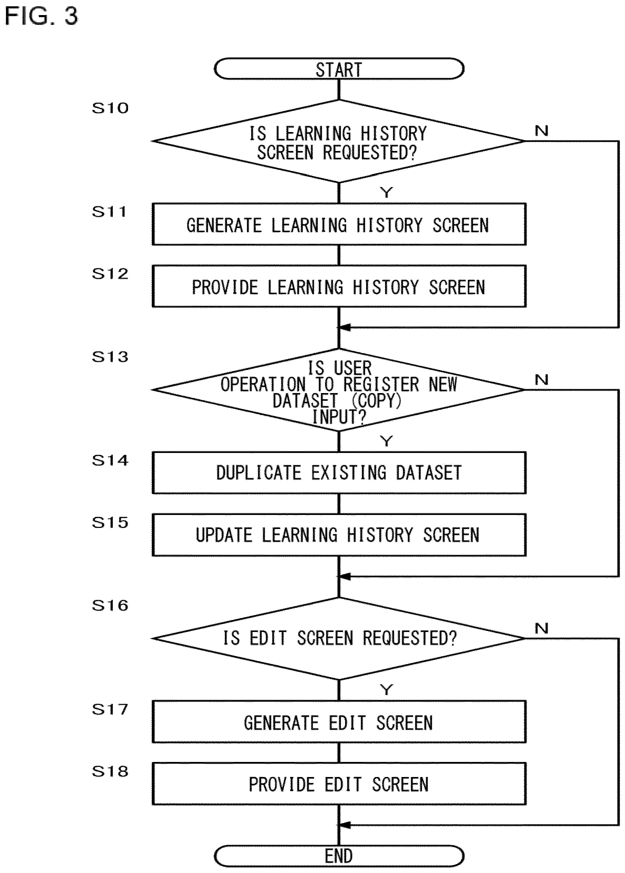

The operation related to support to the creation of a new AI model will now be described. Fig. 3 is a flowchart showing the operation of the AI processing apparatus 12 related to the support to the creation of a new AI model. The user terminal 14 transmits data requesting a learning history screen to the AI processing apparatus 12 in response to a user operation. When the data requesting a learning history screen is received (Y in S10), the learning history screen generation unit 42 of the AI processing apparatus 12 refers to the model dataset stored in the dataset storage unit 26 and generates data for the learning history screen (S11). The management screen provision unit 46 of the AI processing apparatus 12 transmits the data for the learning history screen to the user terminal 14 (S12). The user terminal 14 causes a predetermined display to display the learning history screen. If the AI processing apparatus 12 has not received the data requesting the learning history screen (N in S10), the processes in S11 and S12 are skipped.

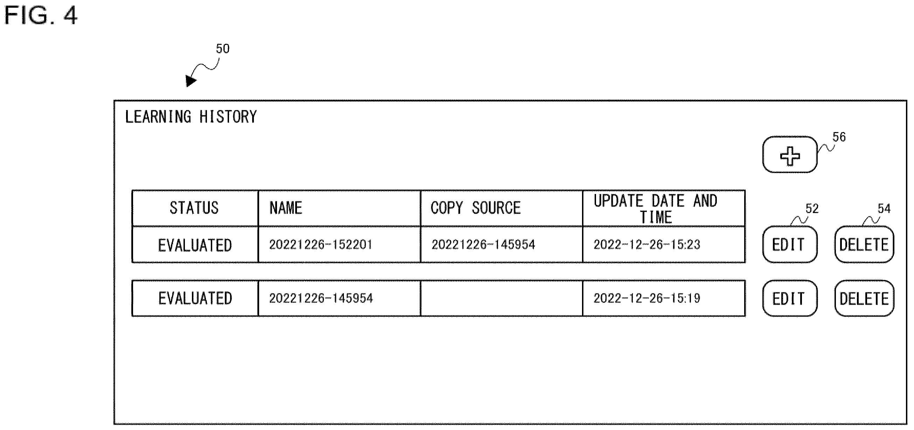

Fig. 4 shows an example of the learning history screen. The learning history screen 50 shows a list of a plurality of sets (i.e., a plurality of model datasets) that associate the training dataset with the AI model generated based on the training dataset. One record in the learning history screen 50 corresponds to one model dataset.

The "status" in the learning history screen 50 corresponds to the (7) AI model status in the model dataset and is, for example, set to one of untrained (the AI model has not been created), trained (the AI model has been created), and evaluated. The "name" in the learning history screen 50 corresponds to the (2) name in the model dataset. The "copy source" in the learning history screen 50 corresponds to the (8) copy source in the model dataset. The "update date and time" in the learning history screen 50 corresponds to the (9) update date and time in the model dataset.

The information on the copy source in the learning history screen 50 is information indicating a derivation relationship between a plurality of model datasets. For example, the copy source value "20221226-152201" of the model dataset of Fig. 4 indicates that the model dataset is derived and created from a further model dataset "20221226-145954".

Further, the learning history screen 50 includes an edit button 52, a delete button 54, and an add button 56 as objects for receiving user operations. The edit button 52 is the object selected when editing the model dataset. The delete button 54 is the object that is selected when deleting the model dataset. The add button 56 is the object selected when adding a new model dataset.

When creating a new AI model, the user inputs a user operation of selecting the add button 56 in the learning history screen 50. The learning history screen 50 is configured such that a create-new window 60 pops up on the learning history screen 50 when the add button 56 is selected.

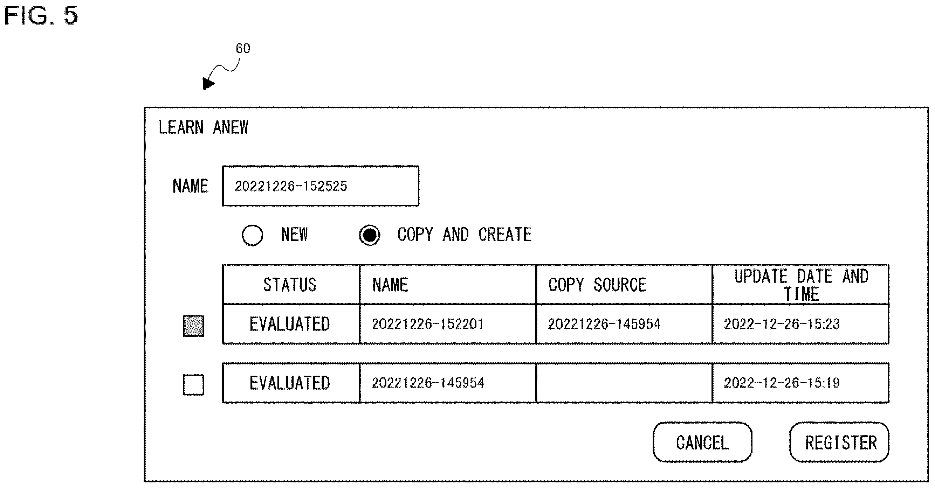

Fig. 5 shows an example of the create-new window. The create-new window 60 includes a name input area for the new model dataset. Further, the create-new window 60 includes an object for selecting whether to create a new model dataset without using an existing one or to derive (copy) from an existing model dataset. Further, the create-new window 60 includes an object for selecting a model dataset that is a derivation source.

In the create-new window 60 of Fig. 5, the user is selecting to create a new model dataset "20221226-152525" by deriving (copying) it from an existing model dataset. Further, the user is selecting the model dataset "20221226-152201" as the derivation source in the create-new window 60. The user then selects a registration button in the create-new window 60. The series of these user operations are user operations to create a new model dataset by deriving it from an existing model dataset. In response to these user operations, the user terminal 14 transmits a create-new request including the name of the new model dataset and information on the derivation source to the AI processing apparatus 12.

When the create-new request sent from the user terminal 14 is received (Y in S13), the duplication unit 48 of the AI processing apparatus 12 duplicates the model dataset that is the derivation source. The duplication unit 48 changes the name of the duplicated model dataset to the name communicated from the user terminal 14 and stores it in the dataset storage unit 26 (S14).

Specifically, the duplication unit 48 causes the dataset storage unit 26 to store a new model dataset that includes, of the model dataset that is the derivation source, at least the (3) training dataset, (4) evaluation dataset, (5) information on a class in classification, (6) data for the AI model. Further, the duplication unit 48 links the model dataset and the model dataset that is the derivation source. In other words, the duplication unit 48 records information indicating that the model dataset is derived from the model dataset that is the derivation source. Specifically, the duplication unit 48 sets the ID of the model dataset that is the derivation source in the (8) copy source of the new model dataset.

The learning history screen generation unit 42 of the AI processing apparatus 12 generates data for the new learning history screen 50 in which a record of the new model dataset is added (S15). The management screen provision unit 46 transmits the data for the new learning history screen 50 to the user terminal 14. The user terminal 14 causes a predetermined display to display a new learning history screen 50. In the case the AI processing apparatus 12 has not received a create-new request (N in S13), the processes in S14 and S15 are skipped.

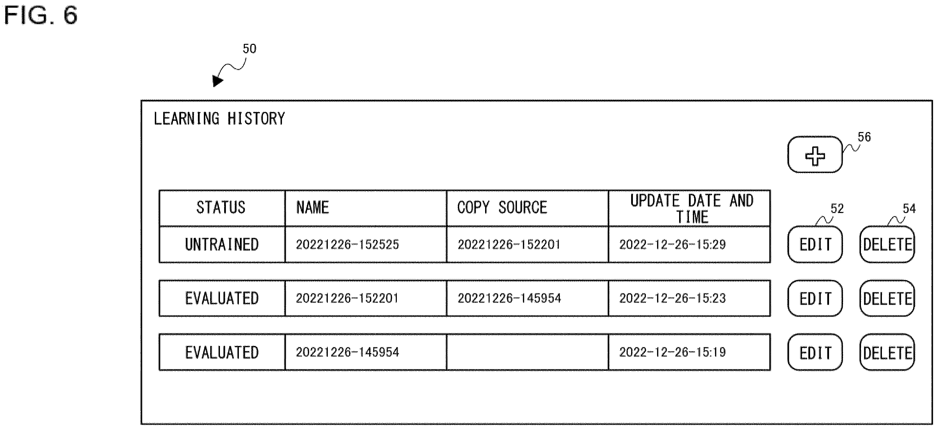

Fig. 6 shows an example of the new learning history screen. In the new learning history screen 50 of Fig. 6, a record of a new model dataset with the status set to "untrained" is added. Further, the model dataset "20221226-152201" designated as the derivation source in the create-new window 60 of Fig. 5 is set as the copy source. The user selects the edit button 52 in the learning history screen 50 to edit the new model dataset. In response to the user operation, the user terminal 14 transmits data designating the ID of the new model dataset and requesting an edit screen for the new model dataset to the AI processing apparatus 12.

When an edit screen is requested from the user terminal 14 (Y in S16), the edit screen generation unit 44 of the AI processing apparatus 12 acquires the contents of the new model dataset (e.g., the training dataset and the evaluation dataset) from the dataset storage unit 26 and generates an edit screen showing the contents of the new model dataset (S17). The edit screen is a user interface that allows the user to set the contents of a new model dataset by editing the contents of an existing model dataset (e.g., the training dataset and the evaluation dataset) that is the derivation source. The management screen provision unit 46 transmits the data for the edit screen to the user terminal 14 (S18). The user terminal 14 causes a predetermined display to display the edit screen. When the request for an edit screen from the user terminal 14 has not been received (N in S16), the processes in S17 and S18 are skipped.

In one variation, the edit screen generation unit 44 may be provided in the user terminal 14. In this variation, the user terminal 14 may transmit data designating the ID of the new model dataset and requesting data for the new model dataset to the AI processing apparatus 12 in response to the user operation. The AI processing apparatus 12 may transmit the contents of the new model dataset stored in the dataset storage unit 26 to the user terminal 14. The edit screen generation unit of the user terminal 14 may generate and display an edit screen showing the contents of the new model dataset provided by the AI processing apparatus 12.

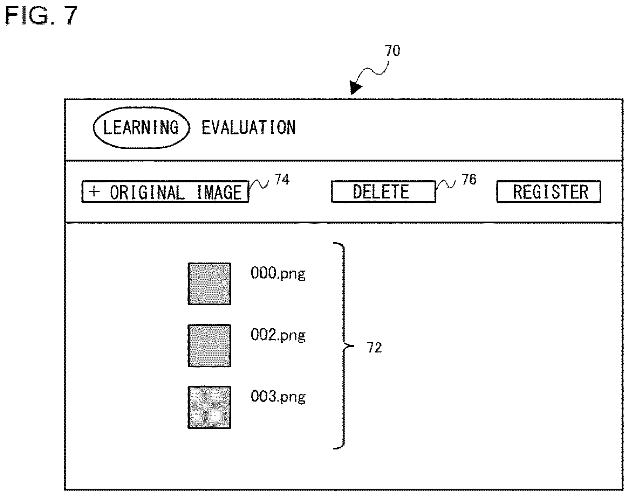

Fig. 7 shows an example of the edit screen. An edit screen 70 in the figure is an edit screen related to a new model dataset derived from an existing model dataset. The figure shows the edit screen for a training dataset 72. In the edit screen 70, the training dataset 72 associated with an existing model dataset can be edited. For example, the user can select an add button 74 to add new training data that is not in the existing model dataset to the model dataset to be edited. Further, the user can select a delete button 76 to delete at least a portion of the training data registered in the existing model dataset from the model dataset to be edited.

The user terminal 14 transmits data indicating the result of editing in the edit screen 70 (e.g., addition of a new training dataset or deletion of a training dataset inherited from the derivation source) to the AI processing apparatus 12. The image registration unit 30 and the dataset setting unit 34 of the AI processing apparatus 12 change the data for the new model dataset stored in the dataset storage unit 26 to reflect the result of editing in the edit screen 70.

The model generation unit 36 of the AI processing apparatus 12 generates, based on a request from the user terminal 14, a new AI model by machine learning based on the new model dataset stored in the dataset storage unit 26. The model generation unit 36 stores the data for the new AI model in a new model dataset in the dataset storage unit 26. That is, the dataset storage unit 26 stores, as the data for the new model dataset, the edited training dataset and the AI model generated based on the training dataset in association with each other. Further, as described above, the dataset storage unit 26 stores information indicating that the new model dataset is derived from the existing model dataset.

The evaluation unit 38 of the AI processing apparatus 12 evaluates the new AI model and stores the evaluation result in the evaluation data storage unit 28 in association with the new model dataset. The user can check the result of evaluation of the new AI model and create a newer model dataset derived from the new model dataset to create a newer AI model. The user can also check the result of evaluation of the new AI model and return to the model dataset that is the derivation source to create a model dataset of a further lineage.

According to the information processing system 10 of the embodiment, the training dataset and the evaluation dataset used for creation of a past AI model can be easily reused to support efficient creation and improvement of the AI model. In further accordance with the information processing system 10, efficient creation of a new AI model can be supported by presenting a derivation relationship between a plurality of model datasets to the user. For example, the information processing system 10 can help the user to select an appropriate derivative source when creating a new AI model.

Given above is a description based on the embodiment. The embodiment is intended to be illustrative only and it will be understood by those skilled in the art that various modifications to combinations of constituting elements and processes of the embodiment are possible and that such modifications are also within the scope of the present disclosure.

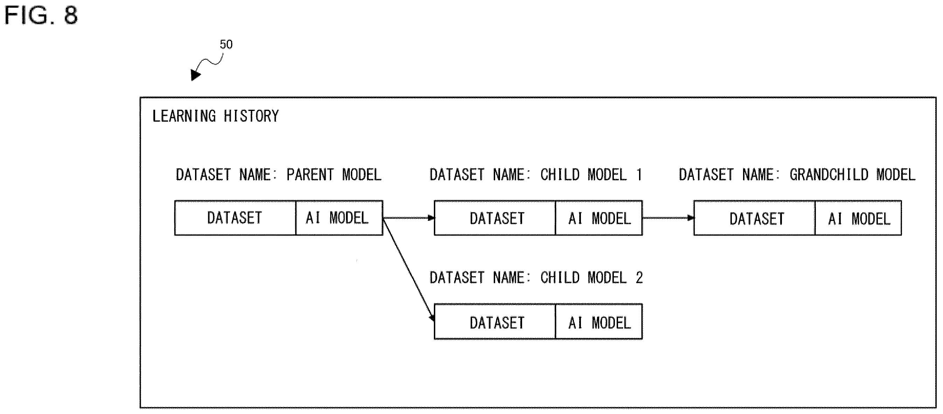

A variation will be described. Fig. 8 shows an example of the learning history screen of a variation. The learning history screen 50 of Fig. 8 includes an image that graphically expresses a derivation relationship between a plurality of model datasets stored in the dataset storage unit 26 of the AI processing apparatus 12. The learning history screen generation unit 42 of the AI processing apparatus 12 generates the learning history screen 50 in which the objects of the plurality of model datasets are connected with arrows such that the start point of the arrow is the derivation source and the end point of the arrow is the derivation destination, in accordance with the derivation relationship between the plurality of model datasets stored in the dataset storage unit 26. The learning history screen 50 of Fig. 8 shows that the child model 1 and the child model 2 are derived from the parent model, and the grandchild model is derived from the child model 1. According to this variation, a learning history screen can be provided in which the user can intuitively grasp the derivation relationship between a plurality of model datasets.

Another variation will be described. The AI processing apparatus 12 of the above embodiment is assumed to be a cloud server. In one variation, the AI processing apparatus 12 may be an on-premises server. Further, the functions of the AI processing apparatus 12 of the embodiment may be distributed for implementation in a plurality of information processing apparatuses. In this case, the plurality of information processing apparatuses may communicate with each other and cooperate as a system to perform the same process as that of the AI processing apparatus 12 of the embodiment. Further, at least some of the functions of the AI processing apparatus 12 of the embodiment may be implemented in an application that runs on the user terminal 14.

Any combination of the embodiment and the variation described above will also be useful as an embodiment of the present disclosure. New embodiments created by the combination provide the advantages of embodiment and the variation combined. It will also be understood by skilled persons that the functions that the constituting elements recited in the claims should achieve are implemented either alone or in combination by the constituting elements shown in the embodiment and the variation.

### <Additional note>

The following technologies are disclosed in the above description of the embodiment and the variation.

### [Technology 1]

An information processing system including:
a model generation unit that generates a function approximator by learning based on a training dataset;
a storage unit that stores the training dataset and the function approximator generated based on the training dataset in association with each other;
a learning history screen generation unit that generates a learning history screen that shows a list of a plurality of sets each associating the training dataset with the function approximator generated based on the training dataset; and
an edit screen generation unit,
wherein the learning history screen is adapted to receive a user operation to create a new set derived from an existing set, and
wherein the edit screen generation unit generates an edit screen for the new set, which is an edit screen that allows editing the training dataset associated with the existing set, in the event that the user operation is input.

According to this information processing system of the embodiment, the training dataset used for creation of a past function approximator can be easily reused to support efficient creation of a function approximator.

### [Technology 2]

The information processing system according to Technology 1,
wherein the edit screen is configured to add, to the training dataset associated with the existing set, new training data.

According to this information processing system of the embodiment, editing of a training dataset used for creation of a past function approximator (e.g., addition of new training data) is supported, and efficient creation of a new function approximator can be supported.

### [Technology 3]

The information processing system according to Technology 1 or 2,
wherein the storage unit stores, as data for the new set, an edited training dataset and the functional approximator generated based on the edited training dataset and further stores information indicating that the new set is derived from the existing set.

According to this information processing system, information indicating a derivation relationship between a plurality of sets each including a training dataset and a function approximator can be stored.

### [Technology 4]

The information processing system according to any one of Technologies 1 through 3,
wherein the learning history screen generation unit generates a learning history screen including information indicating a derivation relationship between the plurality of sets.

According to this information processing system, efficient creation of a new function approximator can be supported by presenting a derivation relationship between a plurality of sets each including a training dataset and a function approximator to the user. For example, the information processing system can help the user to select an appropriate derivation source when creating a new function approximator.

### [Technology 5]

A computer program including computer-implemented modules including:
a module that generates a function approximator by learning based on a training dataset;
a module that stores the training dataset and the function approximator generated based on the training dataset in association with each other;
a module that generates a learning history screen that shows a list of a plurality of sets each associating the training dataset with the function approximator generated based on the training dataset,
wherein the learning history screen is adapted to receive a user operation to create a new set derived from an existing set,
the computer program further including:
   a module that generates an edit screen for the new set, which is an edit screen that allows editing the training dataset associated with the existing set, in the event that the user operation is input.

According to this computer program, the training dataset used for creation of a past function approximator can be easily reused, and a computer is caused to implement the process of supporting efficient creation of a function approximator.

### INDUSTRIAL APPLICABILITY

The technologies of the present disclosure are applicable to information processing systems and information processing apparatuses.

### REFERENCE SIGNS LIST

10 information processing system, 12 AI processing apparatus, 14 user terminal, 26 dataset storage unit, 36 model generation unit, 42 learning history screen generation unit, 44 edit screen generation unit

## Claims

1. An information processing system comprising:
a model generation unit that generates a function approximator by learning based on a training dataset;
a storage unit that stores the training dataset and the function approximator generated based on the training dataset in association with each other;
a learning history screen generation unit that generates a learning history screen that shows a list of a plurality of sets each associating the training dataset with the function approximator generated based on the training dataset; and
an edit screen generation unit,
wherein the learning history screen is adapted to receive a user operation to create a new set derived from an existing set, and
wherein the edit screen generation unit generates an edit screen for the new set, which is an edit screen that allows editing the training dataset associated with the existing set.

2. The information processing system according to claim 1,
wherein the edit screen is configured to add, to the training dataset associated with the existing set, new training data.

3. The information processing system according to claim 1 or 2,
wherein the storage unit stores, as data for the new set, an edited training dataset and the functional approximator generated based on the edited training dataset and further stores information indicating that the new set is derived from the existing set.

4. The information processing system according to claim 1 or 2,
wherein the learning history screen generation unit generates a learning history screen including information indicating a derivation relationship between the plurality of sets.

5. A computer program comprising computer-implemented modules including:
a module that generates a function approximator by learning based on a training dataset;
a module that stores the training dataset and the function approximator generated based on the training dataset in association with each other;
a module that generates a learning history screen that shows a list of a plurality of sets each associating the training dataset with the function approximator generated based on the training dataset,
wherein the learning history screen is adapted to receive a user operation to create a new set derived from an existing set,
the computer program further comprising:
a module that generates an edit screen for the new set, which is an edit screen that allows editing the training dataset associated with the existing set, in the event that the user operation is input.
